# EUROPÄISCHE PATENTANMELDUNG

(11) **EP 2 594 746 A1**
(43) Veröffentlichungstag der Anmeldung: **22.05.2013**
(21) Anmeldenummer: 11189545.4
(22) Anmeldetag: 17.11.2011
(51) Int. Cl.: F01D 13/00, F02C 3/10, F02C 3/30, F02C 6/06, F02C 6/16, F02C 6/18, F02C 7/08, F01K 23/10

(54) **Gasturbinenkraftwerk mit einer Gasturbinenanlage und Verfahren zum Betreiben eines Gasturbinenkraftwerks**

(71) Anmelder: Siemens Aktiengesellschaft, 80333 München (DE)
(72) Erfinder: Hein, Olaf, 45481 Mülheim an der Ruhr (DE); Kliemke, Hardy, 14656 Brieselang (DE); Waruschewski, Andreas, 45357 Essen (DE)

(57) **Zusammenfassung**

Die Erfindung betrifft ein Gasturbinenkraftwerk (1) und ein Verfahren zum Betreiben eines Gasturbinenkraftwerks (1). Erfindungsgemäß weist das Gasturbinenkraftwerk (1) eine ein Stromnetz (50) mit elektrischer Leistung versorgbare Gasturbinenanlage (2) mit zumindest einem Verdichter (3) und einer zugehörigen ersten Gasturbine (4) auf. Abweichend von bisherigen Gasturbinenanlagen ist erfindungsgemäß vorgesehen, dass der Verdichter (3) dieser Gasturbinenanlage (2) und die erste Gasturbine (4) dieser Gasturbinenanlage (2) voneinander entkoppelt sind. Die Erfindung sieht dann eine zweite Turbine (5), insbesondere zweite Gasturbine (5), vor, unter Verwendung derer der Verdichter (3) antreibbar ist bzw. angetrieben wird (100).

Dadurch kann der Verdichter (3) der Gasturbinenanlage (2) (drehzahl-)unabhängig von der ersten Gasturbine (4) betrieben werden. Stromnetzseitige Einflüsse, wie Erzeugungsdefizite im Stromnetz (50), welche durch Drehzahlabsenkung auf die erste Gasturbine (4) einwirken, können demzufolge auch nicht auf den - von der ersten Gasturbine (4) entkoppelten - Verdichter (3) durchschlagen. Dieses gestattet dem erfindungsgemäßen Gasturbinenkraftwerk (1), sehr schnell auf Schwankungen in dem Stromnetz (50) regieren zu können.

## Beschreibung

Die Erfindung betrifft ein Gasturbinenkraftwerk mit einer Gasturbinenanlage sowie ein Verfahren zum Betreiben eines Gasturbinenkraftwerks.

Gasturbinenkraftwerke mit Gasturbinenanlagen sind weithin bekannt.

Ein Gasturbinenkraftwerk ist ein Kraftwerk mit einer Gasturbinenanlage aus einem Verdichter, einer Brennkammer mit meist mehreren Brennern und einer Gasturbine zur Stromerzeugung.

Ein Gasturbinenkraftwerk wird mit fluiden Brennstoffen betrieben. In der Regel sind diese Brennstoffe Kohlenwasserstoffe, Alkohole, Kohle- oder Erdgas. Diese Fluide sind der Brennstoff für die Gasturbinenanlage, deren Gasturbine einen an sie angekoppelten Generator zur Stromerzeugung antreibt.

Dabei saugt zunächst der ebenfalls an die Gasturbine mechanisch angekoppelte und durch diese angetriebene Verdichter Frischluft für den Verbrennungsprozess an und verdichtet diese auf Werte, die meist im Bereich 15 bar - 20 bar liegen.

Die komprimierte Luft wird mit dem Brennstoff der Brennkammer zugeführt. Dort wird das Gemisch aus Frischluft und Brennstoff mittels des bzw. der Brenner gezündet, um dann dort zu verbrennen, wobei Verbrennungsgase - im Wesentlichen Kohlendioxid, Wasserdampf, Stickstoff und Sauerstoff - Temperaturen bis ca. 1500°C und höher erreichen.

Die heißen Abgase strömen dann in die Gasturbine, in der diese einen Teil ihrer Energie durch Entspannung als Bewegungsenergie an die Gasturbine abgeben.

Durch den an die Gasturbine gekoppelten Generator wird die mechanische Leistung dann in elektrische Leistung umwandelt, welche als elektrischer Strom in ein Stromnetz eingespeist wird.

Vom Gasturbinenaustritt werden (kohlendioxidreiche) Abgase bzw. Rauchgase entweder direkt oder mitunter auch über einen Wärmetauscher abgeleitet.

Weiterhin sind andere Kategorien von Kraftwerken bekannt, beispielweise Dampfkraftwerke.

Ein Dampfkraftwerk ist eine - dem Gasturbinenkraftwerk ähnliche - Bauart eines Kraftwerks zur Stromerzeugung aus i.d. Regel festen Brennstoffen, bei der die chemische Energie des Brennstoffes in thermische Energie von Wasserdampf überführt wird. Diese wird wiederum in einer Dampfturbine in Bewegungsenergie umgesetzt, sodass diese dann weiter in einem Generator in elektrische Energie umgewandelt wird.

Man unterscheidet, abhängig vom Brennstoff bzw. Arbeitsmedium, verschiedene Dampfkraftwerksarten, wie beispielsweise Kohlekraftwerke, Ölkraftwerke, Gas-und-Dampf-Kombikraftwerke (GuD-Kraftwerke).

Ein Kohlekraftwerk ist eine spezielle Form des Dampfkraftwerkes, bei welchem Kohle als hauptsächlicher Brennstoff zur Dampferzeugung verwendet wird. Man kennt solche kohlebefeuerten Kraftwerke für Braunkohle wie auch für Steinkohle.

In einem deregulierten, auf einem Energiemix aus verschiedenartigen, insbesondere dezentralen, Energieerzeugern aufgebauten Strommarkt gewinnen ein flexibler Lastbetrieb von Kraftwerken mit Fähigkeit zur (schnellen) Last/Leistungs- und/oder Frequenzregelung in Stromnetzen sowie eine Speicherfähigkeit von (überschüssiger) Leistung in den Stromnetzen immer mehr an Bedeutung ("smart grid").

Hinsichtlich der Frequenzregelung in Stromnetzen unterscheidet man verschiedene Arten der Frequenzregelung, beispielsweise eine Primärregelung und eine Sekundärregelung.

Da elektrische Energie auf dem Weg vom Erzeuger zum Verbraucher nicht bzw. nur schwer gespeichert werden kann, muss Stromerzeugung und Stromverbrauch in jedem Augenblick im Stromnetz im Gleichgewicht stehen, d.h. es muss genau so viel elektrische Energie erzeugt werden, wie verbraucht wird.

Die Frequenz der elektrischen Energie ist dabei eine integrierende Regelgröße und nimmt einen Netzfrequenznennwert an, solange sich Stromerzeugung und Stromverbrauch im Gleichgewicht befinden. Drehzahlen der an einem Stromnetz angeschlossenen Kraftwerksgeneratoren sind mit dieser Netzfrequenz synchronisiert.

Kommt es zu einem bestimmten Zeitpunkt zu einem Erzeugungsdefizit im Stromnetz, so wird dieses Defizit zunächst durch eine in Schwungmassen von rotierenden Maschinen, d.h. Turbinen, Generatoren, Verdichtern, enthaltene Energie gedeckt. Die Maschinen bzw. die - auf Grund ihrer starren Kopplung zusammen/gemeinsam - rotierenden Komponenten, insbesondere Verdichter, Turbine und Generator, werden dadurch abgebremst, wodurch deren Drehzahl und damit die (Netz-)Frequenz weiter sinken.

Eine solchermaßen auftretende Frequenzänderung wirkt sich damit auf die gesamte Turbinenanlage, wie im Falle einer Gasturbinenanlage auf Verdichter, Gasturbine und Generator, aus.

Wird diesem Absinken der Netzfrequenz nicht durch geeignete Leistungs- bzw. Frequenzregelung im Stromnetz entgegengewirkt, könnte dies zum Netzzusammenbruch führen.

So werden Frequenzabweichungen im Bereich von 0.1-3.0 Hz, beispielsweise hervorgerufen durch Kraftwerksausfälle und Schwankungen im Stromverbrauch, durch die Primärregelung auf die an der Primärregelung beteiligten Kraftwerke im gesamten Stromnetz aufgeteilt. Diese stellen dafür eine sogenannte Primärregelreserve, also eine Leistungsreserve, zur Verfügung, welche von den beteiligten Kraftwerken automatisch an das Stromnetz abgegeben wird, um dadurch das Ungleichgewicht zwischen Erzeugung und Verbrauch innerhalb von Sekunden durch Regelung der Erzeugung auszugleichen.

Die Primärregelung dient damit der Stabilisierung der Netzfrequenz bei möglichst kleiner Abweichung, jedoch auf einem von einem vorgegebenen Netzfrequenznennwert abweichenden Niveau.

Die sich an die Primärregelung anschließende Sekundärregelung hat die Aufgabe, das Gleichgewicht zwischen den Stromerzeugern und -verbrauchern im Stromnetz wieder herzustellen und dadurch die Netzfrequenz wieder auf den vorgegebenen Netzfrequenznennwert, z. B. 50 Hz, zurückzuführen und das Gleichgewicht zwischen den Stromerzeugern und -verbrauchern im Stromnetz wieder herzustellen.

Die an der Sekundärregelung beteiligten Kraftwerke stellen hierzu eine Sekundärregelreserve zur Verfügung, um die Netzfrequenz wieder auf den Netzfrequenznennwert zurückzuführen und das Gleichgewicht im Stromnetz wieder herzustellen.

Zum Teil ist die Bereitstellung von Frequenz- bzw. Sekundär-und/oder Primärregelreserve für die Kraftwerke in - durch nationale Vorschriften - bestimmtem Umfang verpflichtend; von den Kraftwerken zur Verfügung gestellte Regelreserven werden den Kraftwerken in der Regel als spezielle Netzdienstleistungen vergütet.

Selbst für große moderne Wärmekraftanlagen mit überkritischen Dampferzeugern, welche üblicherweise in einem Grundlastbetrieb fahren, kann - soweit nicht sowieso verpflichtend - eine Teilnahme an der Frequenzregelung oder einem Nicht-Grundlastbetrieb wirtschaftlich attraktiv sein.

Auch werden mit einem Ausbau von regenerativen Energien (Windenergie) verbunden mit deren schwankender Stromproduktion eine Verschärfung von Anforderungen an eine Regelfähigkeit selbst großer Kraftwerkseinheiten sowie eine Speicherfähigkeit von - aus der schwankenden Stromproduktion resultierenden - überschüssigen Ökostrommengen im Netz erwartet bzw. wünschenswert.

Der Erfindung liegt die Aufgabe zugrunde, ein Gasturbinenkraftwerk sowie ein Verfahren zum Betrieb eines Gasturbinenkraftwerks zur Verfügung zu stellen, welche es ermöglichen, den Anforderungen an zukünftige Stromnetze mit dortigen dezentralen, unterschiedlichen Stromerzeugern und deren schwankende Stromproduktion, insbesondere mit dortig gefordertem flexiblem Lastbetrieb, gerecht zu werden.

Auch soll die Erfindung Gasturbinenkraftwerke ermöglichen, stromnetzseitig geforderte, schnelle Leistungsgradienten zu fahren.

Darüber hinaus liegt der Erfindung auch die Aufgabe zu Grunde, ein Gasturbinenkraftwerk sowie ein Verfahren zum Betrieb eines Gasturbinenkraftwerks zur Verfügung zu stellen, welche einen ökologischen und umweltfreundlichen Betrieb eines Gasturbinenkraftwerks sowie eine ökologische und umweltfreundliche Energieerzeugung und einen solchen Netzbetrieb im Allgemeinen gewährleisten.

Die Aufgabe wird durch ein Gasturbinenkraftwerk sowie durch ein Verfahren zum Betrieb eines Gasturbinenkraftwerks gemäß dem jeweiligen unabhängigen Anspruch gelöst.

Das erfindungsgemäße Gasturbinekraftwerk weist eine Gasturbinenanlage mit zumindest einem Verdichter und einer zugehörigen ersten Gasturbine auf.

Diese Gasturbinenanlage ist vorgesehen, um elektrische Leistung für ein Stromnetz zur Verfügung zu stellen, bzw. zur Erzeugung von in das Stromnetz einzuspeisender elektrischer Leistung.

Hierbei ist unter Gasturbinenanlage mit zugehörigem Verdichter und zugehöriger erster Gasturbine zu verstehen, dass der Verdichter und die erste Gasturbine zumindest insoweit eine anlagentechnische Einheit, die Gasturbinenanlage, bilden, als dass die erste Gasturbine mit verdichtetem Gas bzw. Luft des Verdichters (im Allgemeinen mit verdichtetem Arbeitsmedium des Verdichters) betrieben wird (strömungstechnische Verbindung) .

Abweichend von solchen bisherigen Gasturbinenanlagen, bei welchen der Verdichter und die Gasturbine darüber hinaus, d.h. über die strömungstechnische Verbindung hinaus, - über eine Welle - starr mechanisch gekoppelt sind, ist erfindungsgemäß vorgesehen, dass der Verdichter der Gasturbinenanlage und die erste Gasturbine dieser Gasturbinenanlage bezüglich dieser (mechanischen) Kopplung voneinander entkoppelt sind.

Hierbei sei unter entkoppelt zu verstehen, dass der Verdichter dann völlig unabhängig von der ersten Gasturbine angetrieben werden kann. Kurz, Verdichterteil und Turbinenteil der Gasturbinenanlage sind mechanisch entkoppelt.

Insbesondere gewährleistet die Entkopplung des Verdichters von der ersten Gasturbine, dass dieser unabhängig von einer Drehzahl der ersten Gasturbine - mit anderen, von der Turbinendrehzahl der ersten Gasturbine unabhängigen Drehzahlen - gefahren werden kann.

Stromnetzseitige Einflüsse, wie Erzeugungsdefizite im Stromnetz, welche durch Drehzahlabsenkung auf die erste Gasturbine einwirken, können demzufolge auch nicht auf den - von der ersten Gasturbine entkoppelten - Verdichter durchschlagen. Die Erfindung sieht dann eine zweite Turbine, insbesondere eine zweite Gasturbine oder eine Dampfturbine, vor, unter Verwendung derer der Verdichter antreibbar ist.

Dieser Antrieb kann insbesondere dadurch realisiert werden, dass eine Abtriebswelle dieser zweiten Turbine, insbesondere Gasturbine, - gegebenenfalls mittels einer Kupplung und/oder einem dazwischen geschalteten Getriebe - mit einer Antriebswelle des Verdichters verbunden ist (direkte Kopplung bzw. direkter Antrieb - Abtrieb-Antrieb-Wellenverbindung).

Auch kann vorgesehen sein, dass von einem mit der zweiten Turbine bzw. zweiten Gasturbine verbundenen und durch diese angetriebenen Generator elektrische Leistung erzeugt wird, welche für einen elektrischen Antrieb des Verdichters, welcher beispielsweise in Form eines elektrischen Motors bei dem Verdichter vorgesehen ist, verwendet wird (indirekter Antrieb) .

Anschaulich und vereinfacht ausgedrückt, die Erfindung sieht die mechanische Entkopplung von Verdichter und erster Gasturbine bei einer, zur Stromeinspeiung in ein Stromnetz vorgesehenen Gasturbinenanlage - abweichend von solchen herkömmlichen Gasturbinenanlagen - vor und realisiert den Antrieb des Verdichters dieser Gasturbinenanlage mittels einer zweiten, unabhängigen Turbine, insbesondere Gas- oder Dampfturbine, - direkt oder indirekt, beispielsweise über einen Elektromotor.

Demzufolge wird gemäß der Erfindung der Verdichter unabhängig von der ersten Gasturbine und damit unabhängig von deren Drehzahl wie auch von - lastbedingten - Netzfrequenzänderung im Stromnetz.

Stromnetzseitige Einflüsse, wie Erzeugungsdefizite im Stromnetz, welche durch Drehzahlabsenkung auf die erste Gasturbine einwirken, können demzufolge auch nicht auf den - von der ersten Gasturbine entkoppelten - Verdichter durchschlagen. Dieses gestattet dem erfindungsgemäßen Gasturbinenkraftwerk, flexibel und auch schnell auf Schwankungen im Stromnetz, beispielsweise durch Erhöhung der Verdichterdrehzahl bzw. Verdichterleistung, reagieren zu können.

Auch kann durch die erfindungsgemäße Entkopplung von Verdichterteil und Turbinenteil bei der Gasturbineanlage ein Brennstoffverbrauch der ersten Gasturbine, insbesondere wenn das Gasturbinenkraftwerk mit der Gasturbinenanlage, d.h. insbesondere die erste Gasturbine, und/oder die zweite Turbine in einem Stand-by Betrieb - (ohne Leistungsabgabe an ein Stromnetz) - einsatzbereit gehalten wird, verringert werden, beispielsweise in Zeiten wenn ein Strombedarf in Stromnetz überwiegend aus Ökostrom gedeckt wird.

Bei dem Stand-by Betrieb, bei welchem das Gasturbinenkraftwerk bzw. die Gasturbinenanlage/erste Gasturbine dann vom Stromnetz entkoppelt ist, d.h. es erfolgt hier keine Einspeisung von elektrischer Leistung ins Stromnetz, kann die erste Gasturbine bevorzugt - ohne Last - mit Drehzahlen im Bereich von 0% bis maximal einer Nenndrehzahl gefahren werden.

Da die erste Gasturbine vom Verdichter entkoppelt ist, sind hier nur die Reibungsverluste von (Wellen-)Lagern und/oder Ventilationsverluste, insbesondere im an die erste Gasturbine angeschlossenen Generator, zu überwinden und letztlich nur ein Bruchteil der Brennstoffmenge benötigt, die sonst bei gekoppelten Verdichter-Turbinenanlagen ca. 20% - 30% der Grundlastmenge beträgt.

Ist bzw. wird die erste Gasturbine weiter auch von dem Generator entkoppelt, beispeisweise unter Verwendung einer Schaltkupplung, so sinkt der Brennstoffverbrauch im Stand-by Betrieb noch weiter ab.

Werden die Gasturbinenanlage mit der ersten Gasturbine und auch die zweite Turbine in dem Stand-by Betrieb auf annähernd Betriebstemperatur gehalten, so gewährleistet dies, dass die Gasturbine(n) darüber hinaus noch eine schnelle Leistungssteigerung ausführen können, wenn die maximal mögliche Leistung abgegeben werden soll.

Eine Luftversorgung der Gasturbineanlage und der ersten Gasturbine für diesen Stand-by Betrieb, insbesondere zur Aufrechterhaltung der Betriebstemperatur in der ersten Gasturbine, kann mittels eines mit der ersten Gasturbine gekoppelten Gebläses sowie einer, insbesondere die Gebläseluft erhitzenden, Wärmequelle, beispielsweise ein Brenner oder Ofen, realisiert werden.

Hier kann dann (Gebläse-)Luft durch Pilotbrenner der Gasturbinenanlage geblasen werden, wo diese mit Brennstoff, beispielsweise auf ca. 600 °C bis 700 °C, aufgeheizt werden. Diese heiße Luft zirkuliert, gegebenenfalls mit einer kontinuierlichen Abtrennung eines Teils der Abgase und Ergänzung mit über das Gebläse eingeblasener Frischluft, in der Gasturbinenanlage und hält Komponenten bzw. Bauteile der Gasturbineanlage bzw. der ersten Gasturbine auf Temperatur.

Bei einer alternativen Betriebstemperaturaufrechterhaltung können die Abgase - nicht nur zum Teil - sondern auch vollständig abgezogen werden (keine Zirkulation). Geben diese - mittels eines Wärmetauschers - Wärme an die Gebläseluft ab, so steht ständig heiße Gebläseluft für die Warmluftströmung durch die erste Gasturbinenanlage zur Verfügung.

Als weitere Alternative für die Betriebstemperaturerhaltung im Stand-by Betrieb kann auch vorgesehen sein, eine separate Umwälzluftzirkulation mit separater, durch das Gebläse geförderter Umwälzluft zu realisieren, welche dann unabhängig von der Brennerluft arbeitet. Hierzu werden beispielsweise öl-oder gasbetriebene Öfen verwendet, welche die Gebläseluft entsprechend hoch erhitzen.

Damit, d.h. weil alle Bauteile, insbesondere die erste Gasturbine, betriebswarm sind, ist es möglich, die Gasturbineanlage sehr schnell auf hohe Leistung zu bringen, wenn innerhalb einer kurzen Frist hohe Leistungen benötigt werden, beispielsweise bei - wetterbedingtem - Absinken des Ökostroms im Stromnetz.

Gemäß dem erfindungsgemäßen Verfahren zum Betrieb eines Gasturbinenkraftwerks mit einer Gasturbinenanlage, welche zumindest einen Verdichter und eine erste Gasturbine aufweist, sowie mit einer zweiten Turbine, insbesondere einer zweiten Gasturbine oder Dampfturbine, wobei der Verdichter der Gasturbinenanlage und die erste Gasturbine der Gasturbinenanlage voneinander entkoppelt sind, wird der Verdichter der Gasturbinenanlage unter Verwendung der zweiten Turbine, insbesondere der zweiten Gas- oder Dampfturbine, angetrieben.

Das Gasturbinenkraftwerk ist insbesondere geeignet zur Durchführung des erfindungsgemäßen Verfahrens oder einer dessen nachfolgend erläuterten Weiterbildungen wie auch das Verfahren zum Betrieb des Gasturbinenkraftwerks insbesondere geeignet ist, auf dem erfindungsgemäßen Gasturbinenkraftwerk oder einer seiner nachfolgend erläuterten Weiterbildungen durchgeführt zu werden.

Bevorzugte Weiterbildungen der Erfindung ergeben sich auch aus den abhängigen Ansprüchen und/oder aus nachfolgenden Erläuterungen. Die beschriebenen Weiterbildungen beziehen sich sowohl auf das erfindungsgemäße Gasturbinenkraftwerk als auch auf das erfindungsgemäße Verfahren zum Betreiben eines Gasturbinenkraftwerks. Die durch das erfindungsgemäße Gasturbinenkraftwerk erreichten Vorteile beziehen sich genauso auf das erfindungsgemäße Verfahren zum Betreiben eines Gasturbinenkraftwerks, wie auch umgekehrt.

In einer bevorzugten Weiterbildung ist die Entkopplung von Verdichter und erster Gasturbine derart realisiert, dass eine Abtriebswelle der ersten Gasturbine von einer Antriebswelle des Verdichters entkoppelt, d.h. (mechanisch) getrennt, ist. Zum Antrieb des Verdichters kann dann weiter vorgesehen sein, dass eine Abtriebswelle der zweiten Turbine bzw. zweiten Gas-oder Dampfturbine mit der Antriebswelle des Verdichters gekoppelt, beispielsweise unter Verwendung einer Kupplung und/oder eines Getriebes, ist.

Nach einer weiteren bevorzugten Weiterbildung kann vorgesehen sein, dass die erste Gasturbine mit einem Gebläse gekoppelt ist. Mit diesem Gebläse - sowie im Weiteren mit einer Wärmequelle - kann die erste Gasturbine mit erhitzter Luft, insbesondere in einem Stand-by Betrieb der ersten Gasturbine, versorgt werden. Dadurch kann die erste Gasturbine in dem Stand-by Betrieb auf Betriebstemperatur - oder etwas darunter - gehalten werden.

Weiterhin kann vorgesehen sein, dass die Gasturbinenanlage einen Generator aufweist, welcher über eine Schaltkupplung mit der ersten Gasturbine gekoppelt ist. Mittels dieses Generators wird von der Gasturbinenanlage bzw. von dem Gasturbinenkraftwerk erzeugter Strom in ein Stromnetz eingespeist.

Nach einer weiteren bevorzugten Weiterbildung ist vorgesehen, dass der Verdichter mehrere, beispielsweise zwei oder drei, Teilverdichter - dann oftmals auch als Verdichterstation bezeichnet - aufweist, welche unter Verwendung der zweiten Turbine, insbesondere der zweiten Gasturbine oder Dampfturbine, antreibbar sind. Insbesondere kann vorgesehen sein, dass der Verdichter oder die Verdichterstation oder eine Verdichtereinheit zwei oder mehrere Teilverdichter, insbesondre mit einem oder mehreren Zwischenkühlern, aufweist.

Eine Abwärme aus der Verdichterzwischenkühlung kann dabei vielfältig - energetisch effizient - weitergenutzt werden. So kann beispielsweise eine Kohlendioxid-Abtrennung mit der Abwärme betrieben werden. Auch ist eine Nutzung im Rahmen von Fernwärme, für eine Meerwasserentsalzung(-anlage), eine Braunkohletrocknung bei Vergasungsprozessen oder aber auch für einen Betrieb einer Kältemaschine für eine Kühlung der Verdichteransaugluft möglich.

Auch kann vorgesehen sein, dass die erste Gasturbine zweiflutig, d.h. mit zwei Turbinenteilen, ausgeführt ist. Hier kann weiter vorgesehen sein, dass der durch die Gasturbinenanlage angetriebene Generator zwischen den beiden Turbinenteilen angeordnet ist. Dadurch können dann die Antriebswellen des Generators auf der jeweiligen, sogenannten Kaltseite der Turbinenteile eingebaut werden, also nicht durch Abgaskanäle der Turbinenteile. Dadurch lassen sich Schubkräfte ausgleichen, die andernfalls über teure Axiallager aufgenommen werden müssten.

Auch kann vorgesehen sein, dass die Gasturbinenanlage eine mit der ersten Gasturbine gekoppelte erste, mit Verdichterluft/-gas versorgte Brennkammer mit einem oder mehreren ersten Brennern, insbesondere einen Ergas-, Kohlegas-, Heizöl-und/oder Methanolbrenner, aufweist.

Weiter kann eine zweite, mit der zweiten Turbine, insbesondere mit der zweiten Gas- oder Dampfturbine, gekoppelte Brennkammer mit einem oder mehreren Brennern, insbesondere einem Erdgasbrenner, vorgesehen sein, wobei der zweiten Brennkammer ebenfalls von dem Verdichter verdichtetes Gas zuführbar ist.

Nach einer weiteren bevorzugten Weiterbildung kann eine zusätzliche, insbesondere elektrische, Antriebseinheit, beispielsweise ein E-Motor, vorgesehen sein, unter Verwendung derer der Verdichter antreibbar ist. Auch weitere Antriebseinheiten - in beliebiger Kombination - können für den Verdichter vorgesehen werden, beispielsweise eine dritte Gasturbine und/oder weitere Dampfturbine.

In einer anderen bevorzugten Weiterbildung ist ein Rekuperator vorgesehen, welcher zwischen dem Verdichter der Gasturbinenanlage und der ersten Gasturbine der Gasturbinenanlage angeordnet ist. Dadurch wird der Rekuperator einerseits mit einem von dem Verdichter verdichteten Gas durchströmt. Weiterhin kann Abgas aus der ersten Gasturbine und/oder aus der zweiten Turbine, insbesondere zweiten Gasturbine, zum Wärmeaustausch mit dem Verdichtergas durch den Rekuperator geleitet werden. Das verdichtete Gas aus dem Verdichter wird dadurch erwärmt, beispielsweise auf ca. 600 °C - 800 °C, wobei das Abgas aus der ersten Gasturbine und/oder aus der zweiten Turbine einen Teil seiner Wärme abgibt.

Weiter kann die Restwärme des Abgases - wie auch das Abgas unmittelbar aus der ersten und/oder zweiten Turbine, d.h. ohne Wärmeaustausch im Rekuperator, - vielfältig - energetisch effizient - weitergenutzt werden.

So kann beispielsweise eine Kohlendioxid-Abtrennung mit dem Abgas - gegebenenfalls mit zusätzlicher Abwärme aus dem Rekuperator - betrieben werden. Auch ist eine Nutzung im Rahmen von Fernwärme, für eine Meerwasserentsalzung(-anlage), eine Braunkohletrocknung bei Vergasungsprozessen oder aber auch für einen Betrieb einer Kältemaschine für eine Kühlung der Verdichteransaugluft möglich.

Weiterhin kann eine Aufsättigungseinrichtung vorgesehen sein, unter Verwendung derer vom Verdichter der Gasturbinenanlage verdichtetes Gas, insbesondere vor dem Wärmeaustausch in dem Rekuperator, mit Wasser aufsättigbar ist.

Dieses Wasser kann beispielsweise Leitungswasser, Wasser aus einer Kohlendioxid-Abtrennung oder sonstiges Deionat sein. Auch kann diese Aufsättigungseinrichtung in den Rekuperator integriert sein.

Nach einer besonders bevorzugten Weiterbildung ist eine mit der ersten Gasturbine gekoppelte, insbesondere mit Flüssigbrennstoff befeuerte oder kohle-, gas- oder heizölbefeuerte, Dampfturbinenanlage mit zumindest einem Dampfkessel und einer Dampfturbine vorgesehen. Dem Dampfkessel wird dabei - zumindest zum Teil - Abgas aus der ersten Gasturbine zugeführt. Auch kann vorgesehen sein, dass die Dampfturbinenanlage, insbesondere in einem Stand-by Betrieb der ersten Gasturbine, zum Antrieb des Verdichters eingesetzt wird. Dieses kann unmittelbar erfolgen, wobei hier ein Abtrieb der Dampfturbine den Verdichter antreibet, als auch indirekt, wobei hier mittels der Dampfturbinenanlage ein Generator angetrieben wird, welcher eine elektrische Antriebseinheit, wie einen E-Motor, des Verdichters mit elektrischer Leistung versorgt.

Insbesondere ist hier vorgesehen, dass die Dampfturbinenanlage nach Möglichkeit ständig gefahren wird - und nicht bedarfsabhängig wie beispielsweise die erste Gasturbine und/oder die zweite Turbine. Insbesondere die zweite Gasturbine soll für den Bedarfsfall vorgehalten werden ("Stand-by Betrieb").

Nach einer weiteren besonders bevorzugten Weiterbildung ist ein Druckluftspeicher vorgesehen, welcher dem Verdichter nach- und der ersten Gasturbine vorgeschaltet ist. D.h., der Druckluftspeicher kann mit einem durch den Verdichter verdichteten Gas gefüllt, das verdichtete Gas kann dort als Druckluft gespeichert und/oder die gespeicherte Druckluft kann aus dem Druckluftspeicher der ersten Gasturbine der Gasturbinenanlage bzw. der Brennkammer dieser Anlage, insbesondere zu einer schnellen Leistungssteigerung bei der ersten Gasturbine, zugeführt werden.

Wird der Druckluftspeicher nicht bei konstantem Druck betrieben, sondern bei erhöhtem Druck, ist eine Druckabsenkung - nach dem Druckluftspeicher und vor der Brennkammer notwendig. Dieses kann mittels eines Drosselorgans oder sogar einer Entspannungsturbine realisiert werden.

Auch kann vorgesehen werden, dass bei Entladung des Druckluftspeichers diesen mit Kohlendioxid nachzufüllen. Dieses Kohlendioxid kann dabei über ein Kohlendioxid-Netz dem Druckluftspeicher zugeführt werden. Da das Kohlendioxid im Kohlendioxidnetz in höheren Drücken als im Druckluftspeicher vorgesehen zur Verfügung steht, muss das nachzufüllende Kohlendioxid auf das Druckniveau des Druckluftspeichers entspannt werden, wobei sich das nachzufüllende Kohlendioxid abkühlt.

Dieses heruntergekühlte Kohlendioxid bzw. dessen Kälte kann dazu genutzt werden, einen Wasserstrom in einem Kondensator des Gasturbinenkraftwerks so weit herunterzukühlen, so dass ein Kondensatordruck noch weiter gesenkt werden kann.

Auch kann vorgesehen sein, dass die Dampfturbinenanlage bzw. die Dampfturbine in einer Stand-by Phase der ersten Gasturbine und/oder der zweiten Turbine, insbesondere zweiten Gasturbine, die Leistung zum Füllen des Druckluftspeichers liefert. D.h., die Dampfturbinenanlage treibt - unmittelbar oder indirekt - den Verdichter an, welcher das verdichtete Arbeitsmedium, beispielsweise auf 12 bar - 30 bar verdichtete Verdichterluft, zum Befüllen des Druckluftspeichers liefert. Hier wird dann die Dampfturbinenanlage mit Kohle, Gas, Heizöl oder anderen Flüssigbrennstoffen gefeuert.

Gleichzeitig kann Kohlendioxid aus dem Druckluftspeicher entnommen und weiter verdichtet, beispielsweise auf 80 bar - 120 bar verdichtet und dann in ein Kohlendioxidnetz eingespeist werden.

Auch kann vorgesehenen sein, den Dampfkessel und den Rekuperator in ein Gehäuse zu integrieren, so dass durch die Feuerung des Dampfkessels gleichzeitig auch der Rekuperator auf Betriebstemperatur gehalten werden kann. Warme Stand-by Luft aus der ersten Gasturbine kann hierzu ebenfalls noch benutzt werden.

Nach einer weiteren bevorzugten Ausgestaltung wird das Gasturbinenkraftwerk bei einer Grundlast von ca. 50 MW - 100 MW (reiner Dampfturbinenbetrieb) und/oder bei einer Mittellast von ca. 550 MW - 600 MW (Kraftwerk im Normalbetrieb) und/oder bei einer Spitzenlast von ca. 800 MW - 850 MW (Druckluftspeichereinsatz) gefahren. Darüber hinaus kann das Gasturbinenkraftwerk in dem Stand-by Betrieb - ohne Leistungsabgabe an das Stromnetz - gefahren werden.

Eine schnelle Leistungssteigerung aus dem Stand-by Betrieb heraus wie auch beispeisweise vom Mittellastbetrieb in den Spitzenlastbetrieb kann dabei durch den Druckluftspeicher bewirkt werden. Währenddessen kann der Verdichterteil der Gasturbinenanlage langsam hochgefahren werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen. Insbesondere sind diese Merkmale jeweils einzeln und in beliebiger geeigneter Kombination mit dem erfindungsgemäßen Gasturbinenkraftwerk und/oder mit dem erfindungsgemäßen Verfahren zum Betreiben eines Gasturbinenkraftwerks des jeweiligen unabhängigen Anspruchs kombinierbar.

In Figuren sind Ausführungsbeispiele der Erfindung dargestellt, welche im Weiteren näher erläutert werden.

Es zeigen
- FIG 1: schematisch einen Ausschnitt eines Gasturbinenkraftwerks gemäß einem ersten Ausführungsbeispiel der Erfindung,
- FIG 2: schematisch einen Ausschnitt eines Gasturbinenkraftwerks mit einem Rekuperator gemäß einem zweiten Ausführungsbeispiel der Erfindung,
- FIG 3: schematisch einen Ausschnitt eines Gasturbinenkraftwerks mit einer Kohledioxid-Abtrennung gemäß einem dritten Ausführungsbeispiel der Erfindung,
- FIG 4: schematisch einen Ausschnitt eines Gasturbinenkraftwerks mit einer Dampfturbinenanlage gemäß einem vierten Ausführungsbeispiel der Erfindung,
- FIG 5: schematisch einen Ausschnitt eines Gasturbinenkraftwerks mit einem Druckluftspeicher gemäß einem fünften Ausführungsbeispiel der Erfindung.

Ausführungsbeispiele: Flexibles Gasturbinenkraftwerk in verschiedenen modularen Ausbaustufen (FIGen 1 - 5)

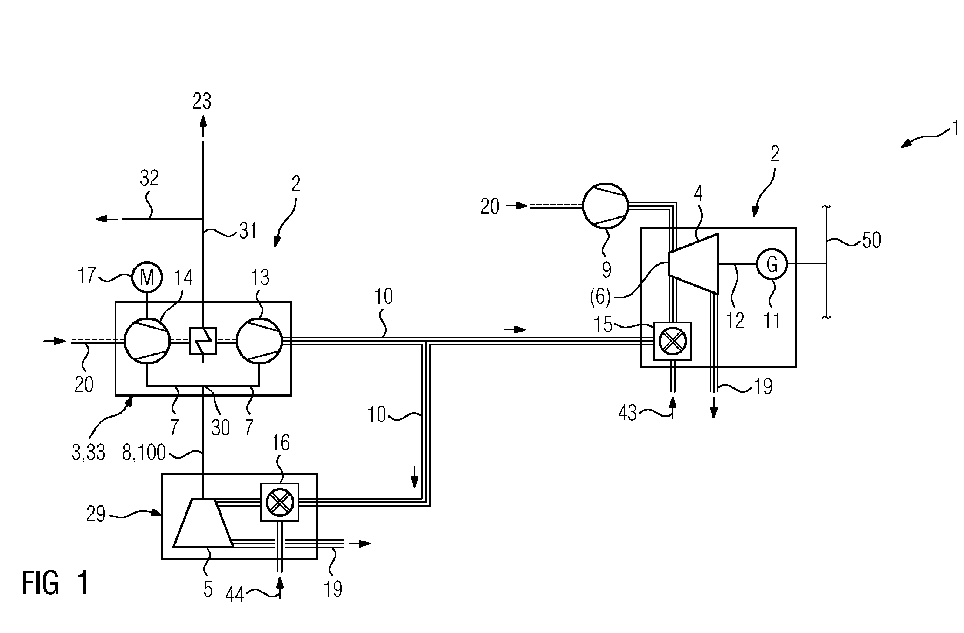

FIGen 1 - 5 zeigen verschiedene modulare Grund-/Ausbaustufen eines Gasturbinenkraftwerks 1, wobei gleiche Bezugszeichen in den FIGen 1 - 5 jeweils gleiche Komponenten bezeichnen. Die Grund-/Ausbaustufen in den FIGen 1 - 5 setzen - ausgehend von der in FIG 1 gezeigten Grundstufe - modular aufeinander auf, wobei die einzelnen Ausbaustufen in den FIGen 2 - 5 aber auch unmittelbar alleine (beliebig kombinierbare Module) als Ausbau der Grundstufe nach FIG 1 realisierbar sind.

### Grundstufe - Entkoppelte Gasturbineanlage (FIG 1)

FIG 1 zeigt das Gasturbinenkraftwerk 1 mit einer Gasturbinenanlage 2 aus einem Verdichter 3, einer Brennkammer 15 mit Brennern, einer Gasturbine 4 und einem mit der Gasturbine 4 über eine schaltbare Kupplung 12 gekoppelten Generator 11 zur Stromerzeugung.

Diese Gasturbinenanlage 2 bzw. die Brennkammer 15 mit den Brennern wird dabei mit dem Brennstoff Erdgas oder Kohlegas befeuert 43.

Wie weiter FIG 1 zeigt, ist - abweichend von bekannten Gasturbinenanlagen - der Verdichter 3 und die Gasturbine 4 hier mechanisch entkoppelt (6).

Der Antrieb des Verdichters 3, hier wie FIG 1 zeigt eine Verdichterstation 33 mit zwei zwischengekühlten Teilverdichtern 13 und 14, erfolgt mittels einer weiteren Gasturbinenanlage 29 mit einer weiteren, zweiten Gasturbine 5 und einer Erdgas befeuerten 44, weiteren bzw. zweiten Brennkammer 16 mit Brennern.

Zunächst saugt der Verdichter 3 der Gasturbinenanlage 2 - angetrieben von der mit dem Verdichter 3 gekoppelten zweiten Gasturbine 5 - Frischluft 20 an und verdichtet diese auf ca. 20 bar.

Dieses komprimierte Arbeitsmedium 10 des Verdichters 3, d.h. die komprimierte Luft 10, d.h. die komprimierte Verdichterluft, kurz auch nur Verdichterluft 10, wird einerseits mit dem jeweiligen Brennstoff der Brennkammer 15 der Gasturbinenanlage 2 wie auch andererseits mit dem jeweiligen Brennstoff der Brennkammer 16 der weiteren bzw. zweiten Gasturbinenanlage 29 zugeführt. In der Brennkammer 15 der Gasturbinenanlage 2 wird das Gemisch aus komprimierter Verdichterluft 10 und Brennstoff verbrennt.

Die durch die Verbrennung auf ca. 1500 °C aufgeheizten heißen Abgase aus der Verbrennung strömen dann in die Gasturbine 4 der Gasturbinenanlage 2, in der diese einen Teil ihrer Energie durch Entspannung als Bewegungsenergie an die Gasturbine 4 abgeben.

Durch den an die Gasturbine 4 gekoppelten Generator 11 wird die mechanische Leistung dann in elektrische Leistung umwandelt, welche als elektrischer Strom in ein Stromnetz 50 eingespeist wird.

Vom Gasturbinenaustritt werden die Abgase bzw. Rauchgase 19 entweder direkt oder mitunter auch über einen Wärmetauscher, der die Frischluft vorwärmt, abgeleitet.

In der Brennkammer 16 der zweiten Gasturbinenanlage 29 wird das Gemisch aus der komprimierter Verdichterluft 10 und dem dortigen Brennstoff ebenfalls verbrannt.

Die durch die Verbrennung aufgeheizten heißen Abgase strömen dann in die zweite Gasturbine 5 der zweiten Gasturbinenanlage 29, in der diese auch einen Teil ihrer Energie durch Entspannung als Bewegungsenergie an diese zweite Gasturbine 5 abgeben.

An die zweite Gasturbine 5 über eine mechanische Abtrieb-Antrieb-Wellenverbindung 30 bzw. 8, 7 angekoppelt ist der Verdichter 3 der Gasturbinenanlage 2, der dadurch durch die zweite Gasturbine - unabhängig von der ersten Gasturbine 4 - angetrieben wird.

Vom Gasturbinenaustritt dieser zweiten Gasturbine 5 werden die Abgase bzw. Rauchgase 19 ebenfalls entweder direkt oder mitunter auch über einen Wärmetauscher, der die Frischluft vorwärmt, abgeleitet.

Die Entkopplung des Verdichters 3 der Gasturbineanlage 2 von der eigentlich zugehörigen ersten Gasturbine 4 dieser Gasturbinenanlage 2 gewährleistet, dass dieser Verdichter 3 unabhängig von der Drehzahl der ersten Gasturbine 4 gefahren werden kann.

Stromnetzseitige Einflüsse, wie Erzeugungsdefizite im Stromnetz 50, welche durch Drehzahlabsenkung auf die erste Gasturbine 4 einwirken, können demzufolge auch nicht auf den - von der ersten Gasturbine 4 entkoppelten - Verdichter 3 durchschlagen.

Dieses gestattet dem gezeigten Gasturbinenkraftwerk 1, flexibel und auch schnell auf Schwankungen im Stromnetz 50 reagieren zu können.

Wie weiter FIG 1 zeigt ist bei der ersten Gasturbine 4 ein Gebläse 9 vorgesehen, welches die erste Gasturbine 4 mit Luft 20 bzw. Frischluft 20 versorgt.

Mittels dieses Gebläses 9 sowie einer eine Gebläseluft 20 erhitzenden Wärmequelle, wie eines (Pilot-)Brenners oder eines Ofens (nicht dargestellt), wird in einem Stand-by Betrieb der Gasturbinenanlage 2, d.h. die Gasturbineanlage 2 gibt hier keine elektrische Leistung an das Stromnetz 50 ab, die Gasturbinenanlage 2 bzw. die erste Gasturbine 2 auf Betriebstemperatur - oder knapp darunter - gehalten.

Man leitet hierzu die Gebläseluft 20 durch Pilotbrenner (nicht dargestellt) der ersten Gasturbinenanlage 2 und heizt hier die Luft auf ca. 600°C - 700 °C auf.

Die heiße Luft lässt man in der ersten Gasturbinenanlage 2 mit kontinuierlicher Abtrennung eines Teils der Abgase 19 und Ergänzung mit über das Gebläse 9 zugeführter Frischluft 20, um den Sauerstoffgehalt ausreichend hoch zu halten, zirkulieren, um deren Bauteile auf Betriebstemperatur - oder knapp darunter - zu halten.

Alternativ (nicht dargestellt) können die Abgase 19 auch vollständig abgezogen werden, wobei hier vorgesehen werden kann, dass diese - mittels eines Wärmetauschers - die Gebläseluft 20 nach dem Gebläse 9 entsprechend für die Warmluftströmung durch die erste Gasturbinenanlage 2 aufheizen.

Als weitere (nicht dargestellte) Alternative für die Betriebstemperaturerhaltung im Stand-by Betrieb der ersten Gasturbineanlage 2 kann vorgesehen sein, dass man eine separate Umwälzluftzirkulation mit separater, durch das Gebläse 9 geförderter Umwälzluft 20 realisiert, welche unabhängig von der Brennerluft arbeitet. Hierzu werden beispielsweise öl- oder gasbetriebene Öfen als Wärmequelle vorgesehen, welche die Gebläseluft 20 entsprechend hoch erhitzen.

Weil somit alle Bauteile, insbesondere die erste Gasturbine, im Stand-by Betrieb betriebswarm gehalten sind, ist es möglich, die Gasturbineanlage 2 sehr schnell aus dem Stand-by Betrieb heraus auf hohe Leistung zu bringen, wenn innerhalb einer kurzen Frist hohe Leistungen benötigt werden, beispielsweise bei - umweltbedingtem - Absinken des Ökostroms im Stromnetz 50.

Eine derartige Aufrechterhaltung der Betriebstemperatur im Stand-by Betrieb in der ersten Gasturbinenanlage 2 kann entsprechend auch für die zweite Gasturbineanlage 29 bei dortigem Stand-by Betrieb vorgesehen sein.

Wie weiter FIG 1 zeigt sieht die Gasturbinenanlage 2 bei dem Verdichter 3 eine zusätzliche Antriebseinheit 17, in diesem Fall einen E-Motor 17, zum Antrieb des Verdichters 3 vor.

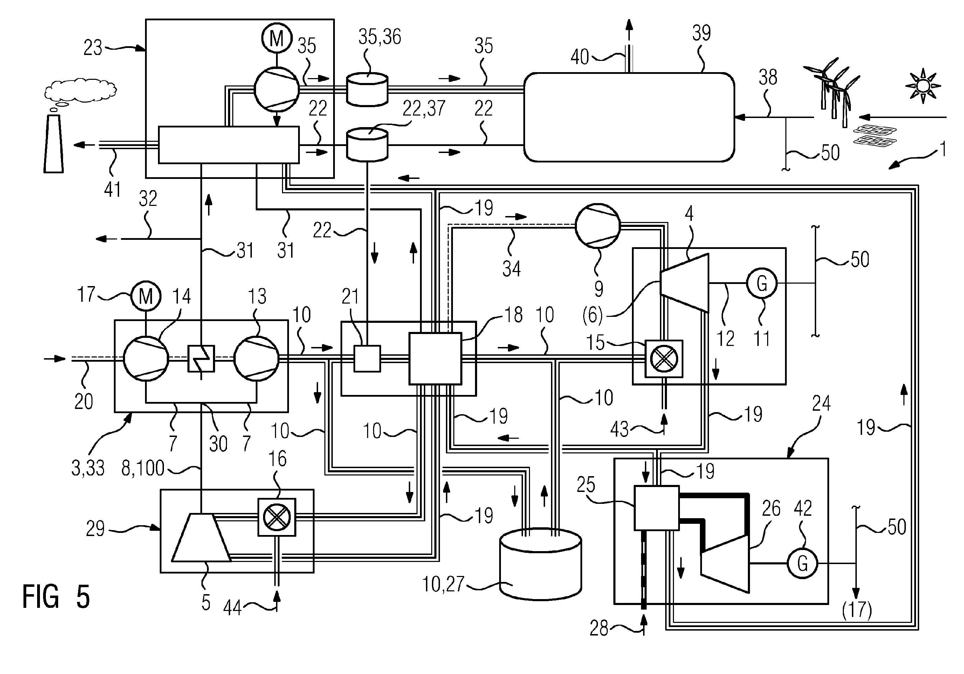

Damit ist es möglich, den Verdichter 3 auch dann zu betreiben, wenn die erste Gasturbinenanlage 2 und/oder die zweite Gasturbinenanlage 29 heruntergefahren sind. Die hier verdichtete Verdichterluft 10 aus dem Verdichter 3 kann dann beispielsweise für eine Befüllung eines Druckluftspeichers 27 (vgl. FIG 5) verwendet werden, um im Fall einer geforderten schnellen Leistungssteigerung für ein Hochfahren der Gasturbineanlagen 2, 29 zur Verfügung zu stehen.

Weiter zeigt FIG 1, dass Abwärme 31 aus der Verdichterstation 33 abgeführt wird und für eine Abwärmenutzung, beispielsweise für eine Kohlendioxid-Abtrennung 23 (vgl. FIGen 3 - 5) oder für Fernwärmenutzung 32, zur Verfügung steht.

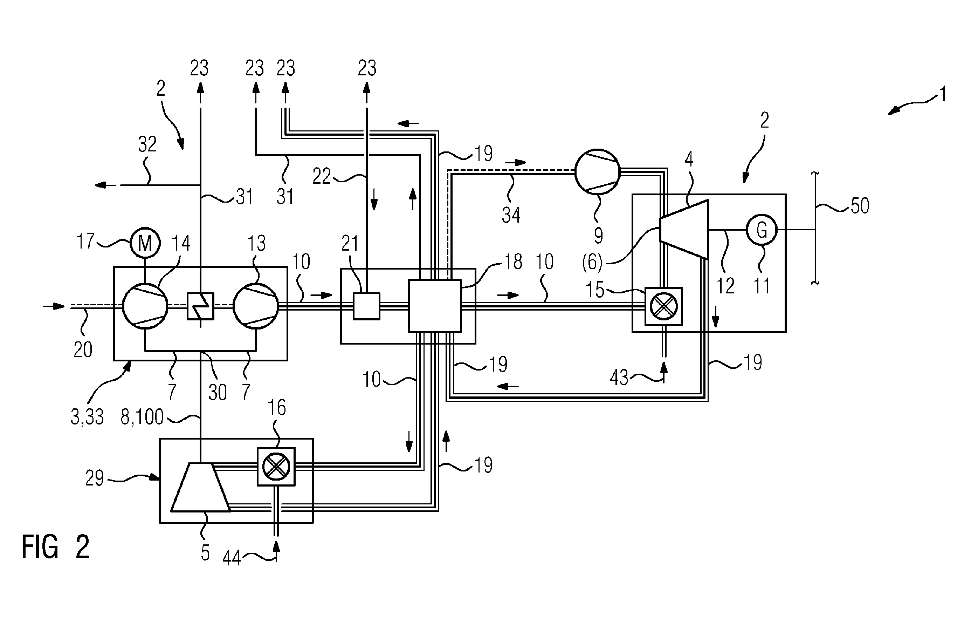

### Ausbaustufe 1 - Rekuperator (FIG 2)

Wie FIG 2 zeigt, sieht das Gasturbinenkraft 1 in dieser Ausbaustufe einen Rekuperator 18 vor.

Durch diesen Rekuperator 18 wird einerseits das aus dem Verdichter 3 bzw. der Verdichterstation 33 austretende, verdichtete Arbeitsmedium bzw. die verdichtete Verdichterluft 10 geleitet. Andererseits durchströmen - für den Wärmetausch im Rekuperator 18 - die Abgase 19 aus der ersten Gasturbine 4 sowie aus der zweiten Gasturbine 5 den Rekuperator 18.

Im Rekuperator 18 erfolgt der Wärmeaustausch zwischen den Abgasen 19 der beiden Gasturbinen 4 und 5 sowie der Verdichterluft 10, wobei die Abgase 19 einen Teil ihrer Wärme/-energie an die Verdichterluft 10 abgeben und dieses dadurch, beispielsweise von ca. 200 °C auf ca. 600 °C, erwärmen.

Weiter wird, wie FIG 2 zeigt, die Restwärme 31 der Abgase 19, beispielsweise mit Temperaturen im Bereich von ca. 600 °C, nach dem Wärmetausch im Rekuperator 18 weiter genutzt.

So werden, wie in FIG 2 angedeutet, die Abgase 19 nach dem Rekuperator 18 der Kohlendioxid-Abtrennung 23 zugeführt, wo aus diesen 19 - bei Nutzung deren Restwärme 31 - Kohledioxid ausgeschieden wird.

Weiterhin zeigt FIG 2, dass diese Ausbaustufe eine, in den Rekuperator 18 integrierte Aufsättigungseinrichtung 21 vorsieht, mittels derer die Verdichterluft 10 vor dem Wärmeaustausch in dem Rekuperator 18 mit Wasser 22 aufgesättigt wird. Dieses Wasser 22 wird, wie FIG 2 andeutet (vgl. auch FIGen 3 - 5), als ein bei der Kohlendioxid-Abtrennung 23 entstehendes Produkt von dort der Aufsättigungseinrichtung 21 zugeführt.

Auch ist bei dieser Ausbaustufe nach FIG 2 vorgesehen, die erste Gasturbinenanlage 2 auf Betriebstemperatur zu halten. Hierzu wird Luft 34 aus dem Rekuperator 18 dem Gebläse 9 zugeführt, welches diese Luft - wieder hocherhitzt durch die Wärmequelle, beispielsweise ein Brenner oder Ofen (nicht dargestellt) - in die erste Gasturbinenanlage 2 bläst.

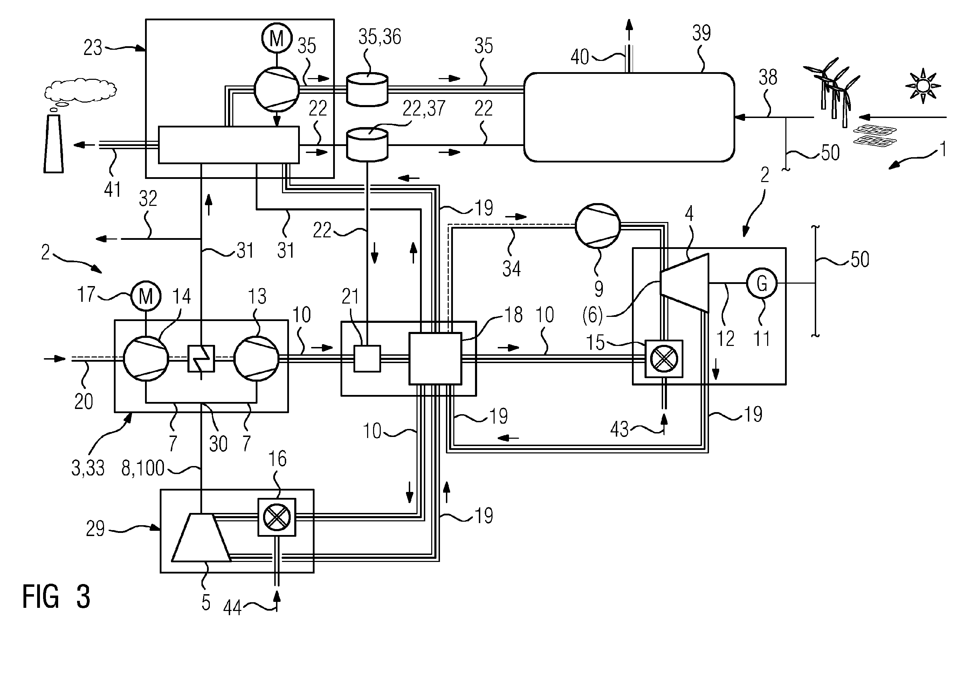

### Ausbaustufe 2 - Kohlendioxid-Abtrennung und Speicherung von Ökostrom (FIG 3)

FIG 3 zeigt das Gasturbinenkraft 2 in einer Ausbaustufe, welche eine Kohlendioxid-Abtrennung 23 bei den Abgasen 18 der ersten und der zweiten Gasturbinenanlage 2, 29 bzw. der ersten und der zweiten Gasturbine 4, 5 - bei gleichzeitiger Nutzung der Abwärme 31 aus dem Gasturbinenkraftwerk 1 - vorsieht.

So werden, wie FIG 3 zeigt, die Abgase 19 der ersten und der zweiten Gasturbine 4, 5 der Kohlendioxid-Abtrennung 23 vorgeführt.

Hier wird - bei gleichzeitiger Nutzung der Abwärme 31 aus der Verdichterstation 33 wie auch der Abwärme 31 aus den Abgasen 19 der ersten und der zweiten Gasturbine 4, 5 das Kohlendioxid 35 aus den Abgasen 19 abgeschieden und in einem Zwischenspeicher 36 bzw. ein größeres Pipelinesystem 36 zwischengespeichert. Das dermaßen gereinigte Restgas/Abgas 41 wird in die Umgebung ausgeleitet.

Hier fällt auch das für die Aufsättigung der Verdichterluft 10 genutzte Wasser 22 an (vgl. FIG 2), welches wie FIG 3 zeigt, in der Kohlendioxid-Abtrennung in einem weiteren Zwischenspeicher 37 zwischengespeichert wird.

Wie weiter FIG 3 zeigt werden das zwischengespeicherte Kohledioxid 35 und das zwischengespeicherte Wasser 22 dann für eine Speicherung 39 von (überschüssigem) Ökostrom 38 - in Form von Methan/Methanol - verwendet.

Bei dieser Ökostrom-Speicherung 38 wird mittels des Ökostroms 38 das Wasser 22 durch Elektrolyse in Wasserstoff und Sauerstoff 40 aufgespalten. Während der Sauerstoff 40 einer weiteren Verwendung zugeführt wird, wird der Wasserstoff zusammen mit dem Kohlendioxid 35 für eine Methan-/Methanolsynthese zur Herstellung des Methans/Methanols verwendet.

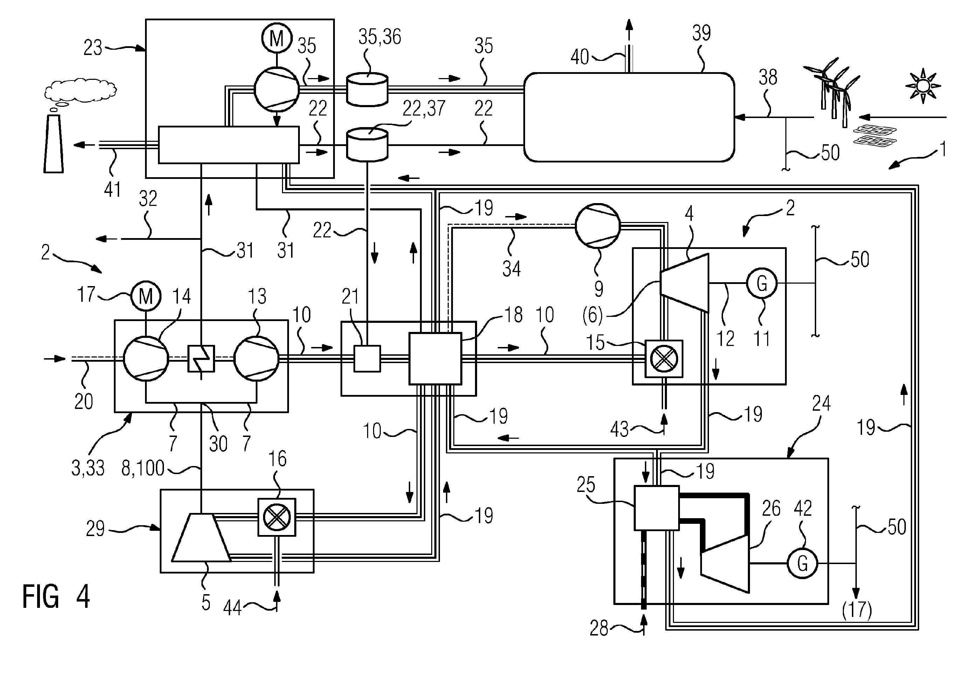

### Ausbaustufe 3 - Dampfturbinenanlage (FIG 4)

Ausbaustufe 3, wie FIG 4 zeigt, sieht als weiteres, ausbauendes Modul eine Dampfturbineanlage 24 vor.

Diese Dampfturbinenanlage 24 - nach einem üblichen Aufbau - sieht einen Dampfkessel 25, eine Dampfturbine 26 sowie einen Strom erzeugenden Generator 42 vor.

Der Dampfkessel 25 der Dampfturbinenanlage 24 ist mittels zuschaltbarer Kohlebefeuerung 28 beheizbar. Gleichzeitig wird der Dampfkessel 25 mit einem Teil der Abgase 19, beispielsweise 5 & - 25 %, aus der ersten Gasturbine 4 versorgt.

Der Rest der Abgase 19, beispielsweise ca. 95 % - 75 %, aus der ersten Gasturbine 4 wird, wie beschrieben (vgl. FIGen 2 und 3), - über den Rekuperator 18 - der Kohledioxid-Abtrennung 23 zugeführt.

Auch die Abgase 19 der Dampfturbinenanlage 24 bzw. der Dampfturbine 26 (Sattdampf) werden, wie FIG 4 zeigt, der Kohlendioxid-Abtrennung 23 zugeführt. In Zeiten, in welchen die Gasturbinen 4, 5 heruntergefahren sind, wird auf die Kohlendioxid-Abtrennung 23 verzichtet oder diese dann mit einem Teil eines Niederdruckdampfes aus der Verdichterstation 33 versorgt.

Die Dampfturbinenanlage 24 wird, gegebenenfalls unter Teillast, ständig gefahren - und nicht bedarfsabhängig wie die erste Gasturbine 4 und die zweite Gasturbine 5 (vgl. Stand-by Betrieb) hoch- und heruntergefahren.

In den Zeiten, in denen die Gasturbine 4 heruntergefahren bzw. die ersten Gasturbineanlage 2 im Stand-by Betrieb ist bzw. läuft - hier kann der Strombedarf im Stromnetz 50 überwiegend aus Windkraft/Solarstrom gedeckt werden - treibt die Dampfturbinenanlage 24 bzw. die Dampfturbine 26 - betrieben durch die zuschaltbare Kohlebefeuerung 28 - den Generator 42 mit entsprechend geringer Leistung an.

Dessen erzeugte Leistung wird einerseits ins Stromnetz 50 eingespeist, um dort bzw. von dort aus zwischengespeichert zu werden, beispielsweise über den Betrieb von Pumpspeicherwerken oder die beschriebene Methan-/Methanolsynthese.

Andererseits wird dessen Leistung in dieser Phase (zum indirekten) Antrieb der Verdichterstation 33 bzw. dessen E-Motor 17 genutzt (möglich ist hier (nicht gezeigt) alternativ auch ein direkter Antrieb der Verdichterstation über eine mechanische Kopplung der Dampfturbine 26 mit dem Verdichter 3), um von dort, wie beschrieben, in diesen Zeiten Verdichterluft 10 für beispielsweise einen Druckluftspeicher 27 (vgl. FIG 5) zur Verfügung zu stellen.

Die erste und die zweite Gasturbine 4, 5 wird während dieser Phase mit minimalem Brennstoff (ohne Last) einsatzbereit gehalten. Durch die beschriebene Entkopplung von Turbinenteil 4 und Verdichterteil 3 (vgl. Grundstufe, FIG 1) ist der Brennstoffverbrauch minimal.

Wenn innerhalb einer sehr kurzen Frist hohe Leistungen des Gasturbinenkraftwerks 1 benötigt/gefordert werden, z.B. bei Nachlassen der Sonnen- und/oder Windenergie, kann die Gasturbinenanlage 2 mittels der ihr zugeführten Druckluft, d.h. der ihr zugeführten komprimierten Verdichterluft 10, schnell auf Leistung gebracht werden, da außerdem, wie FIG 4 auch zeigt, das Gebläse 19 in der beschrieben Art und Weise (vgl. Ausbaustufe 1, FIG 2) die Gasturbinenanlage 2 auf Betriebstemperatur hält.

Die Gasturbinen 4 und 5 wie auch die Dampfturbine 26 können währenddessen - Bauteile schonend - mäßig langsam hochgefahren werden.

Wird in der Betriebsphase mit hoher Leistung die zusätzliche Kohlebefeuerung 28 abgeschaltet, so wird das Gasturbinenkraftwerk 1 mit hohem Wirkungsgrad gefahren.

Weiterhin ist es möglich (nicht gezeigt), den Dampfkessel 25 der Dampfturbinenanlage 24 und den Rekuperator 18 in einem Gehäuse unterzubringen, sodass durch die Befeuerung der Dampfturbinenanlage 24 auch der Rekuperator 18 auf Betriebstemperatur gehalten werden kann. Die warme Stand-by Luft aus der ersten Gasturbine 4 kann hierzu ebenfalls genutzt werden.

### Ausbaustufe 4 - Druckluftspeicher (FIG 5)

Nach der in FIG 5 dargestellt Ausbaustufe sieht das Gasturbinenkraftwerk 1 einen Druckluftspeicher 27 vor.

Dieser Druckluftspeicher 27 ist einerseits an die Verdichterstation 33 gekoppelt sowie andererseits mit der ersten Gasturbinenanlage 2 verbunden, wodurch der Druckluftspeicher 27 mit Verdichterluft 10 gefüllt sowie auch die erste Gasturbinenanlage 2 mit der Verdichterluft 10 aus dem (gefüllten) Druckluftspeicher 27 versorgt werden kann.

Die Befüllung des Druckluftspeichers 27 erfolgt in den Zeiten, in denen die Gasturbine 4 heruntergefahren bzw. die ersten Gasturbineanlage 2 oder die zweite Gasturbinenanlage 29 im Stand-by Betrieb ist bzw. läuft.

Hier treibt dann, wie beschrieben (vgl. Ausbaustufe 3, FIG 4), die Dampfturbinenanlage 24 bzw. die Dampfturbine 26 - betrieben durch die zuschaltbare Kohlebefeuerung 28 - den Generator 42 mit entsprechend geringer Leistung an, dessen Leistung zum Antrieb der Verdichterstation 33 bzw. dessen E-Motor 17 genutzt wird.

Die Verdichterluft 10 aus dem Verdichter 3 wird dem Druckluftspeicher 27 zugeführt und dort - mit beispielsweise 20 bar - gespeichert.

Die dort gespeicherte Druck- bzw. Verdichterluft 10 steht dann, wie beschrieben (vgl. Ausbaustufe 3, FIG 4), zur Verfügung, um, wenn innerhalb einer sehr kurzen Frist hohe Leistungen des Gasturbinenkraftwerks 1 benötigt/gefordert werden, z.B. bei Nachlassen der Sonnen- und/oder Windenergie, die Gasturbinenanlage 4 sehr schnell auf Leistung zu bringen.

Die Gasturbinen 4 und 5 können währenddessen - Bauteile schonend - mäßig langsam hochgefahren werden.

Dabei ist der Druckluftspeicher 27 hier derart ausgelegt, dass er für ca. 20 min die erste Gasturbine 4 mit Druckluft 10 versorgen kann.

Diese Zeitspanne genügt, um insbesondere die zweite Gasturbinenanlage 29 und auch die Dampfturbineanlage 24 genügend langsam hochzufahren.

Wird der Druckluftspeicher 27 wie beschrieben entladen, so kann er mittels Kohlendioxid nachgefüllt werden (nicht dargestellt). Dieses Kohlendioxid kann dabei über ein Kohlendioxid-Netz dem Druckluftspeicher 27 zugeführt werden.

Da dort das Kohlendioxid in höheren Drücken, beispielsweise 80 bar, als für den Druckluftspeicher 27 vorgesehen zur Verfügung steht, wird das nachzufüllende Kohlendioxid von - beispielsweise 80 bar auf 20 bar - entspannt. Dabei kühlt sich das nachzufüllende Kohlendioxid ab.

Dieses heruntergekühlte Kohlendioxid bzw. dessen Kälte kann (nicht gezeigt) dazu genutzt werden, einen Wasserstrom in einem Kondensator des Gasturbinenkraftwerks 1 so weit herunterzukühlen, so dass ein Kondensatordruck noch weiter gesenkt werden kann.

Wird der Druckluftspeicher 27 nicht bei konstantem Druck betrieben (nicht Verdeutlicht), sondern bei erhöhtem Druck, ist eine Druckabsenkung - nach dem Druckluftspeicher 27 und vor der Brennkammer 15 notwendig. Dieses kann (nicht gezeigt) mittels eines Drosselorgans oder sogar einer Entspannungsturbine realisiert werden.

Auch kann (nicht gezeigt) Kohlendioxid aus dem Druckluftspeicher 27 entnommen und weiter verdichtet werden, beispielsweise auf 80 bar - 120 bar, und dann in ein Kohlendioxidnetz eingespeist werden.

In Phasen, in denen Ökoenergie vorrangig ins Stromnetz 50 eingespeist werden soll, kann nun das Gasturbinenkraftwerk 1 - ausgelegt für eine Spitzenlastleistung von beispielsweise ca. 600 MW - auf 20 MW (bei reinem Dampfturbinenbetrieb) heruntergefahren werden. Hier laufen dann - bei sehr geringem Brennstoffverbrauch und betriebsbereiten bzw. auf Betriebstemperatur gehaltenen Gasturbinenanlagen 2 und 29 - die beiden Gasturbinenanlagen 2 und 29 im Stand-by, während die Dampfturbinenanlage 24 bei mäßiger Leistung kohlebefeuert gefahren wird. Hierbei wird der Druckluftspeicher 27 mittels des Verdichters 3 - angetrieben durch die Dampfturbinenanlage 27 - gefüllt.

Wird nun netzseitig - bei Absinken des Ökostromanteils oder sonstigen Frequenzabsenkungen im Stromnetz 50 - hohe Leistung von dem Gasturbinekraftwerk 1 gefordert, so kann das Gasturbinenkraftwerk 1 innerhalb von kürzester Zeit, ca. 5 - 10 min, - weil betriebsbereit/auf Betriebstemperatur - auf die Spitzenleistung hochgefahren werden. Hierzu wird der Druckluftspeicher 27 bei Zuführung der Druckluft 10 in die erste Gasturbine 4 entleert, während parallel die betriebsbereiten Gasturbinenanlagen 4 und 29 hochgefahren werden.

Sind die Gasturbinenanlagen 4 und 29 hochgefahren, kann die Druckluftversorgung aus dem Druckluftspeicher 27 zurückgefahren werden. Dieser wird im nächsten Stand-by wieder wie beschrieben befüllt.

Wenn die Kohlendioxid-Abtrennung 23 - beispielsweise staatlich gefordert - durchgeführt wird bzw. werden muss, erweist sich das Gasturbinenkraft 1 als äußerst effizient, da die Wärmemengen 31 für die Kohlendioxid-Abtrennung 23 (dortiger Kohlendioxid - Desorptionsprozess) wie beschrieben unter optimaler Betriebsweise vollständig aus Abfallenergie des Gasturbinenkraftwerks 1 gedeckt wird.

Auch ist das Gasturbinekraftwerk 1 in Bezug auf Brennstoffkosten - im vergleich zu eine GuD-Kraftwerk günstiger, da ein teil des Brennstoffs hier in Form von Kohle eingebracht wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gasturbinenkraftwerk (1) mit einer Gasturbinenanlage (2), welche zumindest einen Verdichter (3) und eine erste Gasturbine (4) aufweist, **gekennzeichnet durch**
eine zweite Turbine (5), insbesondere zweite Gasturbine (5), wobei der Verdichter (3) der Gasturbinenanlage (2) und die erste Gasturbine (4) der Gasturbinenanlage (2) voneinander entkoppelt sind und der Verdichter (3) unter Verwendung der zweiten Turbine (5) antreibbar ist.

2. Gasturbinenkraftwerk (1) nach mindestens einem der voranstehenden Ansprüche, **gekennzeichnet durch**
ein mit der ersten Gasturbine (4) gekoppeltes Gebläse (9) sowie mit einer Wärmequelle zur Erhitzung von Gebläseluft, unter Verwendung derer die erste Gasturbine (4) mit erhitzter Gebläseluft, insbesondere in einem Stand-by Betrieb der ersten Gasturbine (4), versorgbar ist.

3. Gasturbinenkraftwerk (1) nach mindestens einem der voranstehenden Ansprüche, **gekennzeichnet durch**
einen Rekuperator (18), welcher einerseits mit einer von dem Verdichter (3) verdichteten Gas (10) und andererseits mit Abgas (19) aus der ersten Gasturbine (4) und/oder aus der zweiten Gasturbine (5) zum Wärmeaustausch zwischen dem verdichteten Gas (10) aus dem Verdichter (3) und dem Abgas (19) aus der ersten Gasturbine (4) und/oder zweiten Gasturbine (5) durchströmbar ist.

4. Gasturbinenkraftwerk nach mindestens einem der voranstehenden Ansprüche, **gekennzeichnet durch**
eine Aufsättigungseinrichtung (21), unter Verwendung derer vom Verdichter (3) der Gasturbinenanlage (2) verdichtetes Gas (10), insbesondere vor dem Wärmeaustausch in dem Rekuperator (21), mit Wasser (22) aufsättigbar ist.

5. Gasturbinenkraftwerk nach mindestens einem der voranstehenden Ansprüche, **gekennzeichnet durch**
eine mit Abwärme aus dem Gasturbinenkraftwerk (1) versorgte Kohlendioxid-Abtrennungsanlage (23), welcher Abgas (19) aus der ersten Gasturbine (4) und/oder Abgas (19) aus der zweiten Turbine (5) zu einer Kohledioxid-Abscheidung zuführbar ist.

6. Gasturbinenkraftwerk nach mindestens einem der voranstehenden Ansprüche, **gekennzeichnet durch**
eine mit der ersten Gasturbine (4) gekoppelte Dampfturbinenanlage (24) mit zumindest einem Dampfkessel (25) und einer Dampfturbine (26), welchem Dampfkessel (25) Abgas (19) aus der ersten Gasturbine (4) zuführbar ist.

7. Gasturbinenkraftwerk nach mindestens dem der voranstehenden Ansprüche, **dadurch gekennzeichnet, dass**
die mit der ersten Gasturbine (4) gekoppelte Dampfturbinenanlage (24) eine, insbesondere zuschaltbare, Kohle-, Gas und/oder Heizölbefeuerung (28) aufweist.

8. Gasturbinenkraftwerk (1) nach mindestens dem Anspruch 6 oder 7, derart eingesetzt, dass
die Dampfturbinenanlage (24) ständig gefahren wird und/oder dass die Dampfturbinenanlage (24) in einem Stand-by Betrieb der Gasturbinenanlage (2) mit Kohle, Gas oder Heizöl befeuert wird, in dem Stand-by Betrieb der Gasturbinenanlage (2) Leistung zu einem Befüllen eines Druckluftspeichers (27) liefert und/oder in dem Stand-by Betrieb der Gasturbinenanlage (2) eine elektrische Antriebseinheit (17) des Verdichters (3) mit elektrischer Energie versorgt.

9. Gasturbinenkraftwerk (1) nach mindestens einem der voranstehenden Ansprüche, **gekennzeichnet durch** einen Druckluftspeicher (27), welcher mit einem **durch** den Verdichter (3) verdichteten Gas (10) befüllbar, das verdichtete Gas (10) dort als Druckluft (10) speicherbar und/oder die gespeicherte Druckluft (10) aus dem Druckluftspeicher (27) der ersten Gasturbine (4) zuführbar ist.

10. Gasturbinenkraftwerk (1) nach mindestens dem voranstehenden Anspruch, derart eingesetzt, dass zu einer schnellen Leistungssteigerung des Gasturbinekraftwerks (1) der ersten Gasturbine (4) die Druckluft (10) aus dem Druckluftspeicher (27) zugeführt wird.

11. Gasturbinenkraftwerk (1) nach mindestens einem der voranstehenden Ansprüche, eingesetzt derart, dass
Abwärme aus dem Gasturbinenkraftwerk (1) für eine Kohlendioxid-Abtrennung (23), für Fernwärme, für eine Meerwasserentsalzung, für eine Braunkohletrocknung und/oder für einen Betrieb einer Kältemaschine verwendet wird.

12. Verfahren zum Betreiben eines Gasturbinenkraftwerks (1) mit einer Gasturbinenanlage (2), welche zumindest einen Verdichter (3) und eine erste Gasturbine (4) aufweist, sowie mit einer zweiten Turbine (5), wobei der Verdichter (3) der Gasturbinenanlage (2) und die erste Gasturbine (4) der Gasturbinenanlage (2) voneinander entkoppelt sind, bei dem der Verdichter (3) der Gasturbinenanlage (2) unter Verwendung der zweiten Turbine (5) angetrieben wird (100).

## Geänderte Patentansprüche

### Geänderte Patentansprüche gemäss Regel 137(2) EPÜ.

**1.** Gasturbinenkraftwerk (1) mit einer Gasturbinenanlage (2), welche zumindest einen Verdichter (3) und eine erste Gasturbine (4) aufweist, sowie einer zweiten Turbine (5), wobei der Verdichter (3) der Gasturbinenanlage (2) und die erste Gasturbine (4) der Gasturbinenanlage (2) voneinander entkoppelt sind und der Verdichter (3) unter Verwendung der zweiten Turbine (5) antreibbar ist,
**dadurch gekennzeichnet, dass**
eine zusätzliche elektrische Antriebseinheit (17) vorgesehen ist, unter Verwendung derer der Verdichter (3) antreibbar ist.

**2.** Gasturbinenkraftwerk (1) nach Anspruch 1, **gekennzeichnet dadurch, dass**
die zweite Turbine (5) eine Gasturbine (5) ist.

**3.** Gasturbinenkraftwerk (1) nach mindestens einem der voranstehenden Ansprüche, **gekennzeichnet dadurch, dass** die zusätzliche elektrische Antriebseinheit (17) ein E-Motor ist.

**4.** Gasturbinenkraftwerk (1) nach mindestens einem der voranstehenden Ansprüche, **gekennzeichnet durch**
ein mit der ersten Gasturbine (4) gekoppeltes Gebläse (9) sowie mit einer Wärmequelle zur Erhitzung von Gebläseluft, unter Verwendung derer die erste Gasturbine (4) mit erhitzter Gebläseluft, insbesondere in einem Stand-by Betrieb der ersten Gasturbine (4), versorgbar ist.

**5.** Gasturbinenkraftwerk (1) nach mindestens einem der voranstehenden Ansprüche 2 bis 4, **gekennzeichnet durch** einen Rekuperator (18), welcher einerseits mit einer von dem Verdichter (3) verdichteten Gas (10) und andererseits mit Abgas (19) aus der ersten Gasturbine (4) und/oder aus der zweiten Gasturbine (5) zum Wärmeaustausch zwischen dem verdichteten Gas (10) aus dem Verdichter (3) und dem Abgas (19) aus der ersten Gasturbine (4) und/oder zweiten Gasturbine (5) durchströmbar ist.

**6.** Gasturbinenkraftwerk nach mindestens einem der voranstehenden Ansprüche, **gekennzeichnet durch**
eine Aufsättigungseinrichtung (21), unter Verwendung derer vom Verdichter (3) der Gasturbinenanlage (2) verdichtetes Gas (10), insbesondere vor dem Wärmeaustausch in dem Rekuperator (21), mit Wasser (22) aufsättigbar ist.

**7.** Gasturbinenkraftwerk nach mindestens einem der voranstehenden Ansprüche, **gekennzeichnet durch**
eine mit Abwärme aus dem Gasturbinenkraftwerk (1) versorgte Kohlendioxid-Abtrennungsanlage (23), welcher Abgas (19) aus der ersten Gasturbine (4) und/oder Abgas (19) aus der zweiten Turbine (5) zu einer Kohledioxid-Abscheidung zuführbar ist.

**8.** Gasturbinenkraftwerk nach mindestens einem der voranstehenden Ansprüche, **gekennzeichnet durch**
eine mit der ersten Gasturbine (4) gekoppelte Dampfturbinenanlage (24) mit zumindest einem Dampfkessel (25) und einer Dampfturbine (26), welchem Dampfkessel (25) Abgas (19) aus der ersten Gasturbine (4) zuführbar ist.

**9.** Gasturbinenkraftwerk nach mindestens einem der voranstehenden Ansprüche, **dadurch gekennzeichnet, dass** die mit der ersten Gasturbine (4) gekoppelte Dampfturbinenanlage (24) eine, insbesondere zuschaltbare, Kohle-, Gas und/oder Heizölbefeuerung (28) aufweist.

**10.** Gasturbinenkraftwerk (1) nach mindestens einem der voranstehenden Ansprüche, **gekennzeichnet durch** einen Druckluftspeicher (27), welcher mit einem **durch** den Verdichter (3) verdichteten Gas (10) befüllbar, das verdichtete Gas (10) dort als Druckluft (10) speicherbar und/oder die gespeicherte Druckluft (10) aus dem Druckluftspeicher (27) der ersten Gasturbine (4) zuführbar ist.

**11.** Verwendung eines Gasturbinenkraftwerks (1) nach mindestens einem der voranstehenden Ansprüche, derart, dass Abwärme aus dem Gasturbinenkraftwerk (1) für eine Kohlendioxid-Abtrennung (23), für Fernwärme, für eine Meerwasserentsalzung, für eine Braunkohletrocknung und/oder für einen Betrieb einer Kältemaschine verwendet wird.

**12.** Verfahren zum Betreiben eines Gasturbinenkraftwerks (1) mit einer Gasturbinenanlage (2), welche zumindest einen Verdichter (3) und eine erste Gasturbine (4) aufweist, sowie mit einer zweiten Turbine (5), wobei der Verdichter (3) der Gasturbinenanlage (2) und die erste Gasturbine (4) der Gasturbinenanlage (2) voneinander entkoppelt sind, bei dem der Verdichter (3) der Gasturbinenanlage (2) unter Verwendung der zweiten Turbine (5) angetrieben wird (100), **dadurch gekennzeichnet, dass** eine zusätzliche elektrische Antriebseinheit (17) vorgesehen ist, die zum Antreiben des Verdichters (3) angetrieben wird.

**13.** Verfahren zum Betrieb eines Gasturbinenkraftwerks (1) nach Anspruch 12, **dadurch gekennzeichnet, dass** eine Dampfturbinenanlage (24) nach Anspruch 8 oder 9 ständig gefahren wird und/oder dass die Dampfturbinenanlage (24) in einem Stand-by Betrieb der Gasturbinenanlage (2) mit Kohle, Gas oder Heizöl befeuert wird, in dem Stand-by Betrieb der Gasturbinenanlage (2) Leistung zu einem Befüllen eines Druckluftspeichers (27) liefert und/oder in dem Stand-by Betrieb der Gasturbinenanlage (2) die elektrische Antriebseinheit (17) des Verdichters (3) mit elektrischer Energie versorgt.
